# EUROPÄISCHE PATENTSCHRIFT

(11) **EP 3 625 285 B1**
(45) Veröffentlichungstag und Bekanntmachung des Hinweises auf die Patenterteilung: **12.08.2020**
(21) Anmeldenummer: 17724791.3
(22) Anmeldetag: 16.05.2017
(51) Int. Cl.: C08G 77/04, C08G 77/06

(54) **VERFAHREN ZUR HERSTELLUNG VON ORGANOPOLYSILOXANHARZEN**
METHOD FOR PRODUCING ORGANOPOLYSILOXANE RESINS
PROCÉDÉ DE FABRICATION DE RÉSINES ORGANOPOLYSILOXANE

(43) Veröffentlichungstag der Anmeldung: 25.03.2020
(73) Patentinhaber: Wacker Chemie AG, 81737 München (DE)
(72) Erfinder: KAEPPLER, Klaus, 84489 Burghausen (DE); THUMSER, Elfriede, 84359 Simbach (DE)
(74) Vertreter: Mieskes, Klaus Theoderich
(86) Internationale Anmeldenummer: PCT/EP2017/061662
(87) Internationale Veröffentlichungsnummer: WO 2018/210405

(56) Entgegenhaltungen:
- EP-B1- 2 491 071

## Beschreibung

Die Erfindung betrifft ein mehrstufiges Verfahren zur Herstellung von Organopolysiloxanharzen durch Hydrolyse und Kondensation von Organochlorsilanen.

**Stand der Technik** Verfahren zur Herstellung von Organopolysiloxanharzen sind bereits seit langem bekannt. Verfahren, die Organochlorsilane mit Wasser und Alkohol umsetzen, sind ebenfalls bekannt. Beispielsweise wird im Stand der Technik EP2491071B1 ein kostenoptimiertes Verfahren beschrieben. Die Herstellung erfolgt in drei Schritten, um die Reaktionen besser zu kontrollieren, da ein unkontrollierter Reaktionsverlauf schnell zu einer Vergelung der Reaktionsprodukte führt und diese damit unbrauchbar sind. Der erste Schritt, eine partielle Alkoxylierung der Organochlorsilane, erfolgt dabei kontinuierlich in einem stehend angeordneten Kreislaufreaktor, der über ein Heizaggregat am aufsteigenden Teil des Rohrreaktors die Temperatur im Kreislaufreaktor regelt. Durch diese Temperaturregelung der Umsetzung ist es möglich, trotz einer stark verminderten Ethanolmenge Siliconharze mit gleichen Endprodukteigenschaften herzustellen. Im zweiten Schritt erfolgt die diskontinuierliche Hydrolyse des kontinuierlich anfallenden Reaktionsproduktes ("Teilalkoxylat") des ersten Schrittes durch Zugabe von Wasser in Gegenwart eines mit Wasser nicht mischbaren Lösemittels. Dabei bildet sich Salzsäure, so dass am Ende des Prozesses neben der Siliconharzlösung auch eine wässrig-alkoholische Phase, das sogenanntes "Sauerwasser" vorliegt, welche aus Wasser, Ethanol und Salzsäure besteht. Diese wird im dritten Schritt abgetrennt und einer destillativen Ethanol-Rückgewinnung zugeführt. Das Sumpfprodukt (Wasser, welches HCl enthält) muss zur Abwasseraufbereitung, so dass die darin enthaltene HCl dem Prozess verloren geht.

### Aufgabe der Erfindung

Aufgabe war daher die Bereitstellung eines verbesserten Verfahrens zur Herstellung von Organopolysiloxanharzen mit einem geringeren HCl-Verlust, ohne die Endprodukteigenschaften zu verändern.

Diese Aufgabe wird überraschenderweise von dem erfindungsgemäßen Verfahren gelöst.

Gegenstand der vorliegenden Erfindung ist daher ein Verfahren zur Herstellung von Organopolysiloxanharzen, wobei
in einem ersten, kontinuierlichen Schritt in einem stehend angeordneten Kreislaufreaktor, der über ein Heizaggregat am aufsteigenden Teil des Rohrreaktors die Temperatur im Kreislaufreaktor regelt, Organochlorsilane mit 0,10 bis 0,75 mol Wasser je Mol hydrolysierbaren Chlors und mit 0,3 bis 1,0 mol Alkohol je Mol hydrolysierbaren Chlors umgesetzt werden, wobei das Molverhältnis Wasser zu Alkohol 0,10 bis 2,5 beträgt, wobei das Verhältnis wasserhaltiger Alkohol zu Silangemisch im genannten Rahmen so geregelt wird, dass der Anteil der Alkoholphase im Produktgemisch dieses ersten Schrittes 0,1 - 50 Gew.% beträgt, wobei die Temperatur des Reaktionsmediums durch das Heizaggregat auf eine Temperatur als Regelgröße erfasst wird, mit einer fest eingestellten Festtemperatur im Bereich von 20 - 60°C als Führungsgröße verglichen wird und mit einer Genauigkeit von 5°C im Sinn einer Angleichung an die Führungsgröße geregelt wird, und die eingesetzte Menge Alkohol in diesem ersten Schritt so weit reduziert wird, dass der Anteil an Alkoholphase im gesamten Produktgemisch des ersten Schrittes 0,1 - 40 Gew.% beträgt,
wobei der hier eingesetzte wasserhaltige Alkohol bis zu 31 Gew.% gelöste HCl und bis zu 5 Gew.% in Wasser unlösliche organische Lösungsmittel (bevorzugt Toluol) enthalten kann,
in einem zweiten Schritt zum im ersten Schritt erhaltenen Reaktionsgemisch in Wasser unlösliches organisches Lösungsmittel mit einer Dichte von unter 0,95 kg/l zugegeben wird und Wasser in Mengen von 1,5 bis 5 mol Wasser je Mol Si-Komponente zudosiert wird, und nach Beendigung der Dosierungen des zweiten Schrittes die alkoholische HCl-Phase abgetrennt wird, und
in einem dritten Schritt zu der Siloxanphase des zweiten Schrittes gegebenenfalls in Wasser unlösliches organisches Lösungsmittel mit einer Dichte von unter 0,95 kg/l zugegeben wird und Wasser in Mengen von 5 bis 200 mol Wasser je Mol Si-Komponente zudosiert wird, und
in einem vierten Schritt nach Beendigung der Wasserzugabe im dritten Schritt die gebildete wässrige Phase von der Siloxanphase abgetrennt wird.

### Erster Schritt: Kontinuierliche Teilalkoxylierung

Bei den im ersten Schritt des erfindungsgemäßen Verfahrens eingesetzten Organochlorsilanen handelt es sich vorzugsweise um solche der allgemeinen Formel

RₐSiCl₄₋ₐ (I)

, wobei R gleich oder verschieden sein kann und einen einwertigen, SiC-gebundenen, substituierten oder nicht substituierten Kohlenwasserstoffrest bedeutet und a 1, 2, 3 ist.

Beispiele für nicht substituierte Reste R sind Alkylreste, wie der Methyl-, Ethyl-, n-Propyl-, iso-Propyl-, n-Butyl-, isoButyl-, tert,-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Reste R sind alle für R oben genannten Reste, die vorzugsweise mit Mercaptogruppen, Carboxygruppen, Ketogruppen, Aryloxygruppen, Acryloxygruppen, Methacryloxygruppen, Hydroxygruppen und Halogengruppen substituiert sein können.

Bevorzugt handelt es sich bei Rest R um Kohlenwasserstoffreste mit 1 bis 8 Kohlenstoffatomen, besonders bevorzugt um den Methylrest.

Beispiele für Silane der Formel (I) sind Methyltrichlorsilan, Dimethyldichlorsilan, Trimethylchlorsilan, Isooctyltrichlorsilan, Phenyltrichlorsilan, Diphenyldichlorsilan und Methylphenyldichlorsilan.

Die im erfindungsgemäßen Verfahren eingesetzten Silane sind bevorzugt bei 20°C und einem Druck von 900 bis 1100 hPa flüssig.

Bevorzugt werden Mischungen von Silanen der Formel (I) mit mindestens einem Organotrichlorsilan eingesetzt.

Im Rahmen der vorliegenden Erfindung soll unter hydrolysierbarem Chlor das Chlor verstanden werden, das in Form von SiCl-Gruppen vorliegt.
Im ersten Schritt des erfindungsgemäßen Verfahrens werden Organochlorsilane mit bevorzugt 0,002 bis 0,75 mol, besonders bevorzugt 0,1 bis 0,5 mol, Wasser je Mol hydrolysierbarem Chlor gemischt.
Im ersten Schritt des erfindungsgemäßen Verfahrens werden Organochlorsilane mit bevorzugt 0,1 bis 1,5 mol, besonders bevorzugt 0,3 bis 1,0 mol, Alkohol je Mol hydrolysierbaren Chlors gemischt.
Im ersten Schritt des erfindungsgemäßen Verfahrens wird Wasser zu Alkohol im Molverhältnis von vorzugsweise 0,13 bis 0,85 eingesetzt.

Vorzugsweise wird beim erfindungsgemäßen Verfahren die eingesetzte Menge Alkohol im ersten Schritt so weit reduziert, dass der Anteil an Alkoholphase im gesamtem Produktgemisch des ersten Schrittes vorzugsweise 0 - 50 Gew.%, 0,1 - 50 Gew.%, bevorzugt 0 - 40 Gew.%, 0,1 - 40 Gew.% besonders bevorzugt 0 - 25 Gew.%, 0,1 - 25 Gew.%, ganz besonders bevorzugt 0 - 20 Gew.%, 0,1 - 20 Gew.%, insbesondere ganz besonders bevorzugt 0 - 10 Gew.%, 0,1 - 10 Gew.% beträgt.

Beispiele für Alkohole, die im ersten Schritt des erfindungsgemäßen Verfahrens eingesetzt werden können, sind alle bei einer Temperatur von 20°C und einem Druck von 900 bis 1100 hPa flüssigen Alkohole, wie Methanol, Ethanol, n-Propanol, i-Propanol, Butanol, Pentanol, Hexanol, Heptanol, wobei Methanol, Ethanol und Butanol bevorzugt sind und Ethanol besonders bevorzugt ist.

Falls erwünscht, können im ersten Schritt des erfindungsgemäßen Verfahrens zusätzlich zu Organochlorsilanen, Wasser und Alkohol (wobei der hier eingesetzte wasserhaltige Alkohol bis zu 31 Gew.% gelöste HCl und bis zu 5 Gew.% in Wasser unlösliche organische Lösungsmittel, bevorzugt Toluol, enthalten kann) auch weitere Stoffe eingesetzt werden. Beispiele für gegebenenfalls eingesetzte weitere Stoffe sind Alkoxysilane, wie z.B. Tetraethoxysilan oder wasserunlösliche organische Lösungsmittel, vorzugsweise mit einer Dichte von unter 0,95 kg/l, wie z.B. Toluol.

Bei dem erfindungsgemäßen Verfahren lässt sich das Molekulargewicht des Endprodukts (Organopolysiloxanharz) durch die Reaktionsparameter Abgasdruck und Reaktionstemperatur im ersten Schritt des Herstellungsverfahrens (Alkoxylierungsschritt) steuern. Durch die aktive Regelung über das Heizaggregat wird die Temperatur vorzugsweise im Bereich von 20 bis 60°C, bevorzugt von 25 bis 50°C, besonders bevorzugt 25 bis 45°C, ganz besonders bevorzugt von 30 - 40°C, konstant gehalten. Mittels Verdichter wird der Abgasdruck vorzugsweise im Bereich von 800 bis 2000 hPa, bevorzugt 1000 bis 1500 hPa, besonders bevorzugt 1100 bis 1400 hPa, gehalten. Die Genauigkeit der Temperaturregelung kann bei 5°C, bevorzugt 4,5°C, 4°C, 3,5°C, 3°C, 2,5°C, 2°C, 1,5°C, 1°C, besonders bevorzugt 0,5°C eingestellt werden.

Im ersten Schritt des erfindungsgemäßen Verfahrens werden Organochlorsilan oder Mischungen von Organochlorsilanen in einen Kreislaufreaktor (mit Heizaggregat ausgestattet) kontinuierlich dosiert. Gleichzeitig wird über eine weitere Zuleitung ein Gemisch aus Wasser und Alkohol kontinuierlich dosiert, wobei der Wassergehalt des Alkohol vorzugsweise im Bereich von 5 - 30 Gew.%, bevorzugt 8 bis 28 Gew.%, besonders bevorzugt von 10 - 25 Gew.%, liegt und wobei der hier eingesetzte wasserhaltige Alkohol bis zu 31 Gew.% gelöste HCl und bis zu 5 Gew.% in Wasser unlösliche organische Lösungsmittel, bevorzugt Toluol, enthalten kann. Gegebenenfalls können weitere Stoffe dosiert werden. Dabei entstehen Alkoxysilane, Alkoxychlorsilane und deren Hydrolysate und Kondensate sowie Chlorwasserstoff, Alkylchlorid und Dialkylether. Dabei kann das im ersten Schritt anfallende Chlorwasserstoffgas nach Durchlaufen geeigneter Reinigungsverfahren vorzugsweise wieder in anderen Verfahren als Rohstoff eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Der erste Schritt wird bevorzugt ohne Eintrag von mechanischer Energie, d.h. nur mit Naturumlauf durchgeführt. Der Kreislaufreaktor, auch Loop-Reaktor genannt, ist mit einem Heizaggregat ausgestattet, sowie vorzugsweise noch zusätzlich mit einer Phasentrenneinheit, mittels derer gegebenenfalls entstandene HCl-gesättigte Alkoholphase in den Kreislauf rückgeführt werden kann, versehen.

### Zweiter Schritt: Hydrolyse 1 + Phasentrennung I

Im Rahmen der vorliegenden Erfindung sollen sich Angaben über die Dichte auf eine Temperatur von 20°C und den Druck der umgebenden Atmosphäre, also 900 bis 1100 hPa, beziehen.

Im zweiten Schritt wird das Produkt des ersten Schrittes mit einem in Wasser unlöslichen organischem Lösungsmittel verdünnt und bevorzugt mit Wasser in Mengen von 1,5 bis 5 mol Wasser je Mol Si-Komponente hydrolysiert.

Als in Wasser unlösliche organische Lösungsmittel sollen im Rahmen der vorliegenden Erfindung solche Lösungsmittel verstanden werden, bei denen die Löslichkeit bei 25°C und dem Druck der umgebenden Atmosphäre, also 900 bis 1100 hPa, unter 1 g Lösungsmittel/100 g Wasser liegt.

Beispiele für im erfindungsgemäßen Verfahren eingesetzte in Wasser unlösliche organische Lösungsmittel sind vorzugsweise gesättigte, lineare Kohlenwasserstoffe, wie n-Pentan, n-Hexan, n-Heptan oder n-Octan, sowie deren verzweigte Isomere, sowie aromatische Kohlenwasserstoffe, wie Benzol, Toluol und Xylole, und deren Mischungen. Bevorzugt wird Toluol verwendet.

Das im zweiten Schritt des erfindungsgemäßen Verfahrens eingesetzte vorzugsweise wasserunlösliche organische Lösungsmittel, wird in Mengen von bevorzugt 0,5 bis 50 mol, besonders bevorzugt 1 bis 30 mol, jeweils bezogen auf 1 Mol Silizium-Komponente dosiert. Der zweite Schritt wird vorzugsweise in einem Batch-Reaktor und unter Eintrag von mechanischer Energie (Rühren, Umpumpen) durchgeführt. Der zweite Schritt des erfindungsgemäßen Verfahrens wird vorzugsweise bei einer Temperatur von 0 bis 100°C, insbesondere 20 bis 80°C, und einem Druck von bevorzugt 500 bis 2000 hPa, besonders bevorzugt 600 bis 1500 hPa, durchgeführt.

Es hat sich gezeigt, dass eine Verbesserung der Phasentrennung erreicht werden kann, wenn noch zusätzlich bevorzugt 0,1 bis 0,5 mol Alkohol (bsp. EtOH) jeweils bezogen auf 1 Mol Silizium-Komponente zudosiert werden. Die Alkoholzugabe kann im Gemisch mit Wasser oder dem organischen Lösungsmittel oder erst nach Beendigung der Wasserdosierung erfolgen.

### Dritter Schritt: Hydrolyse 2

Im dritten Schritt wird bevorzugt Wasser in Mengen von 5 bis 200 mol Wasser je Mol Si-Komponente zudosiert.

Optional kann auch im dritten Schritt wasserunlösliches organisches Lösungsmittel zugegeben werden. Dies kann hilfreich sein, um eine Verbesserung der Phasentrennung zu erreichen. Für den dritten Schritt des erfindungsgemäßen Verfahrens geeignete vorzugsweise wasserunlösliche organische Lösungsmittel entsprechen in Art und Menge denen unter Schritt zwei bereits offenbarten.
Der dritte Schritt wird vorzugsweise in einem Batch-Reaktor und unter Eintrag von mechanischer Energie (Rühren, Umpumpen) durchgeführt, vorzugsweise im selben Reaktor wie Schritt zwei. Der dritte Schritt des erfindungsgemäßen Verfahrens wird vorzugsweise bei einer Temperatur von 0 bis 100°C, insbesondere 20 bis 80°C, und einem Druck von bevorzugt 500 bis 2000 hPa, besonders bevorzugt 600 bis 1500 hPa, durchgeführt.
Die im dritten Schritt ablaufenden Hydrolyse- bzw. Kondensationsreaktionen können zusätzlich zur durchgeführten Verdünnung mit Wasser nach beliebigen und bisher bekannten Verfahren beendet werden, wie vorzugsweise z. B. Neutralisation mit Base, wie z. B. Natronlauge.

### Vierter Schritt: Phasentrennung II

Im vierten Schritt des erfindungsgemäßen Verfahrens erfolgt die Trennung der lösungsmittelhaltigen Siloxanphase von der wässrigen Phase. Dies kann mit dem Fachmann bekannten Methoden erfolgen, wie vorzugsweise z.B. 5 bis 60 minütiges Ruhenlassen des Reaktionsgemisches, bis sich die Phasen separiert haben. Die abgetrennte wässrige Phase wird einer Abwasseraufbereitung zugeführt.

Aus der siloxanhaltigen organischen Phase wird anschließend in einem **fünften Schritt (Reinigung + Konzentrierung)** das Endprodukt, eine Siliconharzlösung beliebiger Konzentration oder ein reines (unverdünntes) Siliconharz, hergestellt.

Diese Aufarbeitung der so erhaltenen organischen Siloxanphase erfolgt vorzugsweise nach beliebigen und im Stand der Technik bekannten Verfahren, wie z.B. Neutralisation, Filtration und Abtrennung aller leichtflüchtigen Bestandteile, bevorzugt durch Destillation. Bei den leichtflüchtigen Bestandteilen handelt es sich bevorzugt um niedrigsiedende Siloxane und um das in Wasser unlösliche organische Lösungsmittel, vorzugsweise mit einer Dichte von unter 0,95 kg/l. Des Weiteren kann man beispielsweise bei der Siloxanphase durch Entfernen des Lösungsmittels, etwa durch Destillation in einem

Dünnschichtverdampfer, die Konzentration erhöhen und so Organopolysiloxanharzlösungen herstellen oder das Lösungsmittel ganz entfernen und so lösemittelfreie Organopolysiloxanharze erhalten.

Nach dem erfindungsgemäßen Verfahren kann eine Vielzahl von Organopolysiloxanharzen oder -lösungen mit definierten Eigenschaften reproduzierbar hergestellt werden, wie z. B. solche, die SiC-gebundene Reste, Hydroxyreste und/oder Alkoxyreste enthalten.
Die erfindungsgemäß hergestellten Organopolysiloxanharze können bei 20°C und einem Druck von 900 bis 1100 hPa fest oder flüssig sein und haben ein durchschnittliches Molekulargewicht gegen Polystyrolstandard gemessen von vorzugsweise bis 100.000 g/mol, besonders bevorzugt 800 bis 10.000 g/mol.

Die erfindungsgemäß hergestellten Organopolysiloxanharze sind vorzugsweise zumindest zum Teil, bevorzugt jedoch ganz, löslich in Alkoxysilanen und deren Kondensationsprodukten sowie in flüssigen Siloxanen.

Bevorzugt handelt es sich bei den erfindungsgemäß hergestellten Organopolysiloxanharzen um solche der Formel [RSiO_{3/2}]_{g}[R₂SiO]_{b}[R₃SiO_{1/2}]_{c}[SiO_{4/2}]_{d}[R¹O_{1/2}]e[HO_{1/2}]_{f} mit R gleich Methyl-, Isooctyl- oder Phenylrest, R¹ gleich Methyl-, Ethyl- oder Butylrest, g=2-200, b=0-100, c=0-50, d=0-10, e=0-20 und f=0-10.

Beispiele für die erfindungsgemäß hergestellten Organopolysiloxanharze sind [MeSiO_{3/2}]₇₂[Me₂SiO]₂₄[EtO_{1/2}]₂,₈[HO_{1/2}]_{0,4}, [MeSiO_{3/2}]_{12,2}[Me₂SiO]_{3,3}[Me₃SiO_{1/2}]_{1,4}[EtO_{1/2}]_{0,6}[HO_{1/2}]_{0,18}, [MeSiO_{3/2}]_{15,3}[Me₂SiO]_{2,6}EMe₃SiO_{1/2}]₁[IOSiO_{3/2}]_{0,8}[MeO_{1/2}]₂[HO_{1/2}]_{0,3} und [PhSiO_{3/2}]_{9,8}[Me₂SiO]₂[MeO_{1/2}]_{1,8}[BuO_{1/2}]_{0,04}[HO_{1/2}]_{0,18}, wobei Me gleich Methylrest, Et gleich Ethylrest, IO gleich Isooctylrest, Ph gleich Phenylrest und Bu gleich Butylrest bedeutet.

Die erfindungsgemäß hergestellten Organopolysiloxanharze können für alle Zwecke verwendet werden, für die auch bisher Organopolysiloxanharze eingesetzt worden sind, wie z. B. im Bautenschutz, im Coating-Bereich, in Kosmetik-Produkten, im Bereich Textil sowie Papier. Insbesondere eignen sie sich zur Herstellung von Emulsionen und als Bindemittel zur Herstellung von Farben und Lacken und als Bindemittel zur Herstellung von Elektroisolierstoffen auf Glimmerbasis.

Ein großer Vorteil des erfindungsgemäßen Verfahrens ist, dass es wesentlich ökonomischer ist, die im zweiten Schritt abgetrennte alkoholische HCl-Phase ohne weitere Behandlung wieder in Schritt 1 einzusetzen und somit den enthaltenen Alkohol dem Prozess ohne vorherige aufwändige Rückgewinnung wieder zur Verfügung zu stellen. Die auf diesem Weg in Schritt 1 eingebrachte HCl verlässt Schritt 1 als HCl-Gas und kann dadurch ebenfalls wieder verwertet werden.

Ein weiterer Vorteil ist, dass die im vierten Schritt abgetrennte wässrige Phase kaum noch HCl oder Alkohol enthält und so ohne große Rohstoffverluste der Abwasseraufbereitung zugeführt werden kann. Damit ist auch eine energieintensive Alkoholrückgewinnung aus dem Sauerwasser nicht mehr notwendig.

Mit Hilfe des erfindungsgemäßen Verfahrens werden Organopolysiloxanharze erhalten, welche eine hohe Lagerstabilität aufweisen, sehr chloridarm sind, einen geringen VOC Gehalt aufweisen und sehr kostengünstig herstellbar sind.

Des Weiteren hat das Verfahren den Vorteil, dass bei Umgebungstemperatur feste Organopolysiloxanharze herstellbar sind.

### Beispiele

Die folgenden Beispiele dienen der Erläuterung der Erfindung, ohne diese zu beschränken.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 25°C, bzw. bei einer Temperatur, die sich beim Zusammengeben der Reaktanden bei Raumtemperatur ohne zusätzliche Heizung oder Kühlung einstellt, durchgeführt.

### Vergleichsbeispiel 1

### Schritt 1: Teilalkoxylierung analog zu EP2491071B1

Ein Methylchlorsilangemisch aus 91 Gew.% Methyltrichlorsilan und 9 Gew.% Dimethyldichlorsilan wird wie in EP2491071B1 beschrieben kontinuierlich mit einem Gemisch aus 81 Gew.% EtOH und 18 Gew.% Wasser und 1 Gew.% Toluol (Verunreinigung im EtOH) umgesetzt. (0,434 mol EtOH pro Mol SiCl und 0,243mol H₂O pro Mol SiCl; Molverhältnis H₂O/EtOH = 0,56)

Das Verhältnis EtOH-Wasser-Gemisch zu Methylchlorsilangemisch betrug 0,48. Die Reaktionstemperatur beträgt 31-32°C, der Überdruck 300-310mbar, die mittlere Verweilzeit der Siloxanphase 20-24min. Das als Reaktionsprodukt erhaltene flüssige Teilalkoxylat enthält 18,5 Gew.% Cl in Form von gelöstem Chlorwasserstoff und am Si gebundenem Cl. Der Gehalt an EtOH in Form von freiem EtOH und in Form von am Si gebunden EtO-Gruppen betrug 41 Gew.%.

74,5 Gew.% des im Chlorsilangemisch enthaltenen Chlors verlassen den Prozessschritt 1 in Form von Chlorwasserstoffgas.

Das gewonnene Teilalkoxylat hat eine Dichte von 1,075g/cm³ (25°C) .

### Schritt 2: Hydrolyse 1

Ein Gemisch aus 245g Teilalkoxylat aus Schritt 1 und 350g Toluol (3,8mol) werden vorgelegt und innerhalb von 35min werden 61,4g Wasser (3,4mol) unter Rühren dosiert. Die Temperatur der Mischung stieg dabei von 25 auf 54°C.

Nach dem Ende der Wasserzugabe wird noch 30min nachgerührt. Danach werden zu dieser Mischung 294,1g Wasser (16,3mol) schnell, innerhalb von 5 min unter starkem Rühren dosiert.

### Schritt 3: Phasentrennung

Nach einer Stunde Wartezeit wird die untere wässrige Phase = Sauerwasser (468,5g) mit einem HCl-Gehalt von 9,4 Gew.% (abs. 44g HCl) abgetrennt. (Zusammensetzung laut GC: 68,9 Gew.% Wasser; 20,94 Gew.% EtOH, 0,05 Gew.% Toluol) (Der durch Titration ermittelte HCl-Gehalt wurde bei der GC-Auswertung berücksichtigt).

Das Sauerwasser wird zu Rückgewinnung des Ethanols destilliert. EtOH fällt als Kopfprodukt an. Die enthaltene HCl geht mit dem Sumpfprodukt in das Abwasser und ist somit verloren.

### Schritt 4: Reinigung + Konzentrierung

Die verbliebenen 472,4g toluolischer Harzlösung mit einem Toluolgehalt 60,1 Gew.% werden mit einem Gemisch aus A-Kohle, Dicalite und NaHCO₃ versetzt und gerührt, und die Feststoffe werden wieder abfiltriert.

Die auf diese Weise gereinigte Harzlösung wird anschließend bei 175°C bis zu einem Endvakuum von 10mbar von niedrig siedenden Bestandteilen befreit.

Es wurden 115,2g zähflüssiges Harz (Analysendaten siehe Tabelle 1) und 318,4g Destillat mit einem Gehalt von mehr als 90 Gew.% Toluol erhalten.

### Beispiel 1

### Schritt 1: Teilalkoxylierung erfolgt analog zu Vergleichsbeispiel 1

### Schritt 2: Hydrolyse 1 + Phasentrennung I

Ein Gemisch aus 246g Teilalkoxylat aus Schritt 1 und 350g Toluol (3,8mol) werden vorgelegt und innerhalb von 34min ein Gemisch aus 73,6g Wasser (4mol) und 14,7g (0,32mol) EtOH unter Rühren dosiert (16,6 Gew.% EtOH in Wasser). Die Temperatur der Mischung stieg von 25 auf 55°C.

Nach dem Ende der Dosierung wird 30min nachgerührt und die untere ethanolische HCl-Phase nach einer Wartezeit von 1h abgetrennt. Es wurden 213,5g Ethanolphase mit einem titrierten HCl-Gehalt von 20,2 Gew.% (43,13g HCl) erhalten. (Zusammensetzung auf Basis NMR: ca. 20 Gew.% HCl, 50 Gew.% EtOH und ca. 26 Gew.% Wasser; < 4 Gew.% Toluol) Dieses Gemisch kann im Schritt 1 für die Teilalkoxylierung wieder eingesetzt werden.

### Schritt 3: Hydrolyse 2

Zur toluolische Siloxanphase nach Schritt 2 werden 281,7g Wasser (15,6mol) innerhalb von 5 min unter starkem Rühren dosiert.

### Schritt 4: Phasentrennung II

Nach einer Stunde Wartezeit wird die untere wässrige Phase (279,1g mit einem HCl-Gehalt von 0,21 Gew.% (abs. ~0,6g HCl) abgetrennt. (Zusammensetzung laut GC: 98,1 Gew.% Wasser; 1,82 Gew.% EtOH, 0,02 Gew.% Toluol) Die wässrige Phase enthält nur wenig HCl, Ethanol, Toluol und Sx und kann als Prozessabwasser zur Abwasseraufbereitungsanlage abgegeben werden.

### Schritt 5: Reinigung + Konzentrierung

Die verbliebenen 464,5g toluolische Sx-Phase mit einem Toluolgehalt 65,5 Gew.% (34,5% Sx-Verbindungen) werden mit einem Gemisch aus A-Kohle, Dicalite und NaHCO₃ versetzt, gerührt und die Feststoffe danach wieder abfiltriert und entsorgt.
Die auf diese Weise gereinigte Harzlösung wird anschließend bei 175°C bis zu einem Endvakuum von 10mbar von niedrig siedenden Bestandteilen (hauptsächlich Toluol) befreit. Es wurden 112,3g zähflüssiges Harz und 297g Destillat erhalten. Das Destillat besteht zu mehr als 90 Gew.% aus Toluol und kann wieder im Schritt 2 eingesetzt werden.

Die nachfolgende Tabelle 1 zeigt die Analysedaten des Produktes aus Beispiel 1 im Vergleich mit dem Produkt aus Vergleichsbeispiel 1.

**Tabelle 1**

| | Beispiel 1 | Vergleichsbeispiel 1 |
|---|---|---|
| Ausbeute 100% Harz [g] | 112 | 115 |
| Viskosität (80°C) [mPa*s] | 14000 | 28650 |
| Viskosität einer 50 Gew.% Lösung in Toluol [mm²/s] | 12 | 18 |
| Gesamtchlorgehalt [ppm] | <3 | <3 |
| HCl Titration [ppm] | 2,6 | 0,2 |
| Mw [g/mol] | 7500 | 7700 |
| Mn [g/mol] | 1650 | 1800 |
| Polidispersität (Mw/Mn) | 4 | 4 |
| [Me2SiO2/2]-Gew.[%](29Si-NMR) | 11 | 11 |
| [MeSi03/2]-Gew. [%] (29Si-NMR) | 83 | 84 |
| Si-O1/2Et Gew. [%](29Si-NMR) | 4,9 | 4,4 |
| Si-OH Gew. [%] (29Si -NMR) | 0,71 | 0,73 |

## Patentansprüche

1. Verfahren zur Herstellung von Organopolysiloxanharzen, wobei in einem ersten kontinuierlichen Schritt in einem stehend angeordneten Kreislaufreaktor, der über ein Heizaggregat am aufsteigenden Teil des Rohrreaktors die Temperatur im Kreislaufreaktor regelt, Organochlorsilane mit 0,10 bis 0,75 mol Wasser je Mol hydrolysierbaren Chlors und mit 0,3 bis 1,0 mol Alkohol je Mol hydrolysierbaren Chlors umgesetzt werden, wobei das Molverhältnis Wasser zu Alkohol 0,10 bis 2,5 beträgt, wobei das Verhältnis wasserhaltiger Alkohol zu Silangemisch im genannten Rahmen so geregelt wird, dass der Anteil der Alkoholphase im Produktgemisch dieses ersten Schrittes 0,1 - 50 Gew.% beträgt, wobei die Temperatur des Reaktionsmediums durch das Heizaggregat auf eine Temperatur als Regelgröße erfasst wird, mit einer fest eingestellten Festtemperatur im Bereich von 20 - 60°C als Führungsgröße verglichen wird und mit einer Genauigkeit von 5°C im Sinn einer Angleichung an die Führungsgröße geregelt wird, und die eingesetzte Menge Alkohol in diesem ersten Schritt so weit reduziert wird, dass der Anteil an Alkoholphase im gesamten Produktgemisch des ersten Schrittes 0,1 - 50 Gew.% beträgt,
wobei der hier eingesetzte wasserhaltige Alkohol bis zu 31 Gew.% gelöste HCl und bis zu 5 Gew.% in Wasser unlösliche organische Lösungsmittel enthalten kann,
in einem zweiten Schritt zum im ersten Schritt erhaltenen Reaktionsgemisch in Wasser unlösliches organisches Lösungsmittel mit einer Dichte von unter 0,95 kg/l zugegeben wird und Wasser in Mengen von 1,5 bis 5 mol Wasser je Mol Si-Komponente zudosiert wird und zudem 0,1 bis 0,5 mol Alkohol je Mol Silizium-Komponente zugegeben wird, und nach Beendigung der Dosierungen des zweiten Schrittes die alkoholische HCl-Phase abgetrennt wird, und
in einem dritten Schritt zu der Siloxanphase des zweiten Schrittes gegebenenfalls in Wasser unlösliches organisches Lösungsmittel mit einer Dichte von unter 0,95 kg/l zugegeben wird und Wasser in Mengen von 5 bis 200 mol Wasser je Mol Si-Komponente zudosiert wird, und
in einem vierten Schritt nach Beendigung der Wasserzugabe im dritten Schritt die gebildete wässrige Phase von der Siloxanphase abgetrennt wird.

2. Verfahren nach Anspruch 1, **dadurch gekennzeichnet, dass** im zweiten Schritt wasserunlösliches, organisches Lösungsmittel in Mengen von 0,5 bis 50 mol bezogen auf 1 Mol Si-Komponente zudosiert wird.

3. Verfahren nach Anspruch 1 oder 2, **dadurch gekennzeichnet, dass** im zweiten Schritt wasserunlösliches, organisches Lösungsmittel in Mengen von 1 bis 30 mol bezogen auf 1 Mol Si-Komponente zudosiert wird.

## Claims

1. A process for preparing organopolysiloxane resins, where
in a first continuous step in an upright circulation reactor, which, via a heating assembly on the ascending part of the tube reactor, regulates the temperature in the circulation reactor, organochlorosilanes are reacted with 0.10 to 0.75 mol of water per mole of hydrolyzable chlorine and with 0.3 to 1.0 mol of alcohol per mole of hydrolyzable chlorine, where the molar ratio of water to alcohol is 0.10 to 2.5, where the ratio of hydrous alcohol to silane mixture is regulated within the stated boundaries in such a way that the fraction of the alcohol phase in the product mixture of this first step is 0.1 - 50 wt%, where the temperature of the reaction medium is captured by the heating assembly to a temperature as regulated variable, compared with a fixed temperature in the range of 20 - 60°C as control variable, and is regulated with an accuracy of 5°C in the sense of an alignment to the control variable, and the amount of alcohol used in this first step is reduced to an extent such that the fraction of alcohol phase in the overall product mixture of the first step is 0.1 - 50 wt%,
where the hydrous alcohol used here may comprise up to 31 wt% of dissolved HCl and up to 5 wt% of water-insoluble organic solvents,
in a second step, to the reaction mixture obtained in the first step, water-insoluble organic solvent having a density of below 0.95 kg/l is added and water is metered in amounts of 1.5 to 5 mol of water per mole of Si component and, moreover, 0.1 to 0.5 mol of alcohol per mole of silicon component is added, and, after the end of the metered additions in the second step, the alcoholic HCl phase is separated off, and
in a third step, to the siloxane phase of the second step, optionally water-insoluble organic solvent having a density of below 0.95 kg/l is added and water is metered in amounts of 5 to 200 mol of water per mole of Si component, and
in a fourth step, after the end of the addition of water in the third step, the aqueous phase formed is separated off from the siloxane phase.

2. The process as claimed in claim 1, **characterized in that** in the second step, water-insoluble organic solvent is metered in amounts of 0.5 to 50 mol, based on 1 mole of Si component.

3. The process as claimed in claim 1 or 2, **characterized in that** in the second step, water-insoluble organic solvent is metered in amounts of 1 to 30 mol, based on 1 mole of Si component.

## Revendications

1. Procédé pour la préparation de résines d'organopolysiloxane, dans lequel dans une première étape en continu dans un réacteur à circulation en boucle disposé verticalement, qui régule la température dans le réacteur à circulation en boucle par l'intermédiaire d'un groupe de chauffage au niveau de la partie montante du réacteur tubulaire, des organochlorosilanes sont transformés avec 0,10 à 0,75 mole d'eau par mole de chlore hydrolysable et avec 0,3 à 1,0 mole d'alcool par mole de chlore hydrolysable, le rapport molaire eau/alcool étant compris entre 0,10 et 2,5, le rapport d'alcool contenant de l'eau sur le mélange de silane dans ledit cadre étant réglé de telle façon que la proportion de la phase alcoolique dans le mélange de produits de cette première étape est de 0,1 à 50 % en poids, la température du milieu de réaction étant saisie par le groupe de chauffage à une température en tant que grandeur de réglage, étant comparée avec une température fixée ajustée fermement dans la plage de 20 à 60 °C en tant que grandeur de guidage et étant réglée avec une précision de 5 °C dans le sens d'une équivalence avec la grandeur de guidage, et la quantité d'alcool utilisée dans cette première étape étant tellement réduite que la proportion de phase alcoolique dans le mélange total de produits de la première étape est de 0,1 à 50 % en poids, l'alcool contenant de l'eau utilisé ici pouvant contenir jusqu'à 31 % en poids d'HCl dissous et jusqu'à 5 % en poids de solvants organiques insolubles dans l'eau,
dans une deuxième étape, un solvant organique insoluble dans l'eau comportant une densité inférieure à 0,95 kg/l est ajouté au mélange réactionnel obtenu dans la première étape et de l'eau en des quantités de 1,5 à 5 moles d'eau par mole de composant de Si sont ajoutées progressivement et en outre 0,1 à 0,5 mole d'alcool par mole de composant de silicium est ajoutée, et après la fin des ajouts de la deuxième étape, la phase d'HCl alcoolique est séparée, et
dans une troisième étape, éventuellement un solvant organique insoluble dans l'eau comportant une densité inférieure à 0,95 kg/l est ajouté à la phase de siloxane de la deuxième étape et de l'eau en des quantités de 5 à 200 moles d'eau par mole de composant de Si sont ajoutées progressivement, et dans une quatrième étape, la phase aqueuse formée après la fin de l'ajout d'eau dans la troisième étape est séparée de la phase de siloxane.

2. Procédé selon la revendication 1, **caractérisé en ce que** dans la deuxième étape un solvant organique insoluble dans l'eau est ajouté progressivement en des quantités de 0,5 à 50 moles par rapport à 1 mole de composant de Si.

3. Procédé selon la revendication 1 ou 2, **caractérisé en ce que** dans la deuxième étape un solvant organique insoluble dans l'eau est ajouté progressivement en des quantités de 1 à 30 moles par rapport à 1 mole de composant de Si.
